# FASCICULE DE BREVET EUROPEEN

(11) **EP 3 774 387 B1**
(45) Date de publication et mention de la délivrance du brevet: **06.08.2025**
(21) Numéro de dépôt: 19719563.9
(22) Date de dépôt: 01.04.2019
(51) Int. Cl.: B60C 1/00, C08L 7/00, C08L 9/00, B60C 17/00, B60C 15/06

(54) **PNEUMATIQUE AVEC BOURRELETS COMPRENANT UNE COMPOSITION DE CAOUTCHOUC SPECIFIQUE**
REIFEN MIT WULSTEN AUS EINER SPEZIFISCHEN KAUTSCHUKZUSAMMENSETZUNG
TYRE WITH BEADS COMPRISING A SPECIFIC RUBBER COMPOSITION

(30) Priorité: 09.04.2018 FR 1853074
(43) Date de publication de la demande: 17.02.2021
(73) Titulaire: COMPAGNIE GENERALE DES ETABLISSEMENTS MICHELIN, 63000 Clermont-Ferrand (FR)
(72) Inventeur: BELIN, Lionel, 63040 Clermont-Ferrand Cedex 9 (FR); MARECHAL, Jean-Marc, 63040 Clermont-Ferrand Cedex 9 (FR)
(74) Mandataire: M.F.P. Michelin
(86) Numéro de dépôt international: PCT/FR2019/050750
(87) Numéro de publication internationale: WO 2019/197745

(56) Documents cités:
- EP-A1- 2 938 505
- EP-A1- 2 938 505
- WO-A1-2014/105813
- FR-A1- 2 997 898
- US-A1- 2015 191 586
- US-A1- 2015 191 586

## Description

### Domaine technique de l'invention

La présente invention concerne un pneumatique, en particulier pour véhicules de tourisme.

### Art antérieur

Les pneumatiques pour véhicules de tourisme comportent habituellement :
- deux bourrelets destinés à entrer en contact avec une jante de montage, chaque bourrelet comportant au moins une structure annulaire de renforcement dite « tringle » ainsi qu'un bourrage, le bourrage étant situé radialement à l'extérieur de la structure annulaire de renforcement ;
- deux flancs prolongeant les bourrelets radialement vers l'extérieur et s'unissant dans un sommet comprenant une bande de roulement ;
- au moins une armature de carcasse s'étendant depuis les bourrelets à travers les flancs jusqu'au sommet, et comportant une pluralité d'éléments de renforcement de carcasse.

Dans un arrangement particulier, chaque bourrelet peut comporter en outre une bande latérale placée axialement à l'extérieur de l'armature de carcasse et du bourrage. Une telle structure est bien connue de l'Homme du métier et est, par exemple, décrite dans les documents FR 2 940 187 et FR 2 940 188.

On souhaite que les compositions de caoutchouc mises en œuvre dans les pneumatiques présentent la meilleure processabilité possible, c'est-à-dire qu'elles soient faciles à mettre en forme et conservent cette forme jusqu'à leur incorporation dans le pneumatique afin, en particulier, que l'architecture de ce dernier soit respectée. La processabilité de la composition de caoutchouc est liée à certaines propriétés à cru, notamment sa plasticité, qui est souvent difficile à concilier avec l'obtention des performances en termes d'endurance.

On connait du document FR 3 005 471 une composition comprenant comme élastomère majoritaire un polybutadiène présentant une plasticité Mooney comprise dans un domaine de valeurs allant de 40 à 70 unités Mooney et une charge renforçante spécifique, à savoir un noir de carbone présentant une surface spécifique comprise entre 15 et 25 m²/g et un indice d'absorption d'huile par des échantillons comprimés (COAN) comprise entre 65 et 85 ml/100g, cette composition présentant une excellente processabilité. Cette composition est utilisée dans les inserts de flancs d'un pneumatique adapté pour un roulage à plat pour améliorer leur résistance à l'échauffement. On peut citer aussi les documents US 2015/191586 A1 et WO 2014105813 A1.

Un souci constant des manufacturiers est par ailleurs de développer des pneumatiques qui présentent une faible résistance au roulement et une endurance élevée.

On connait ainsi du document FR 2 940 189 une composition de caoutchouc utilisée pour réaliser la bande latérale comprenant au moins une charge renforçante majoritaire spécifique constituée par un noir de carbone ayant une surface spécifique CTAB inférieure à 10 m²/g et permettant de réduire la résistance au roulement du pneumatique. Ce document n'aborde pas l'aspect endurance du pneumatique.

Or la demanderesse a découvert qu'un pneumatique comprenant dans les bourrelets une composition spécifique, qui présente une excellente processabilité et permet de maintenir, voire d'améliorer en particulier les propriétés d'endurance du pneumatique sans pénaliser la résistance au roulement.

### Description détaillée de l'invention

L'invention a pour objet un pneumatique comprenant deux bourrelets destinés à entrer en contact avec une jante de montage, deux flancs prolongeant les bourrelets radialement vers l'extérieur et s'unissant dans un sommet comprenant une bande de roulement, au moins une armature de carcasse s'étendant depuis les bourrelets à travers les flancs jusqu'au sommet, ladite armature étant ancrée dans les deux bourrelets, une couche d'étanchéité s'étendant entre les deux bourrelets et située axialement à l'intérieur de l'armature de carcasse, chaque bourrelet comportant au moins :
- une structure annulaire de renforcement dite tringle ;
- une couche interne s'étendant radialement vers l'extérieur depuis ladite tringle et au contact de ladite armature de carcasse, dite bourrage tringle ;
- éventuellement une couche interne située axialement à l'extérieur de l'armature de carcasse et du bourrage tringle, dite bande latérale ;
caractérisé en ce que les bourrelets comprennent une composition de caoutchouc C à base :
- d'un premier élastomère constitué de polybutadiène ;
- d'un deuxième élastomère ;
- d'une charge renforçante comprenant majoritairement un noir de carbone, dit noir NC, présentant une surface spécifique BET au plus égale à 30 m²/g et un indice d'absorption d'huile d'échantillons comprimés (COAN) au moins égal à 60 ml/100 g ;
- d'un système de réticulation;
dans lequel le premier élastomère de la composition de caoutchouc C est fonctionnalisé, le premier élastomère de la composition de caoutchouc C comprenant un groupe fonctionnel comprenant une fonction choisie dans le groupe constitué par les fonctions alcoxysilane, silanol, amine, acide carboxylique, polyéther et leur combinaison, ladite composition de caoutchouc C comprenant pour seuls élastomères lesdits premier et deuxième élastomères.

### Définitions

L'expression « radial » se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

Par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des structures annulaires de renforcement de chaque bourrelet.

Une direction « circonférentielle » est une direction qui est perpendiculaire à la fois à un rayon du pneumatique et à la direction axiale.

Deux éléments de renforcement sont dits « parallèles » dans ce document lorsque l'angle formé entre les deux éléments est inférieur ou égal à 20°.

Par l'expression "partie en poids pour cent parties en poids d'élastomère" (ou pce), il faut entendre au sens de la présente invention, la partie, en masse pour cent parties en masse d'élastomère ou de caoutchouc, les deux termes étant synonymes.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. De préférence par majoritaire, on entend présent à plus de 50%, de préférence plus de 60%, 70%, 80%, 90%, et plus préférentiellement le composé « majoritaire » représente 100%.

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Pneumatique

Le pneumatique selon l'invention comprend deux bourrelets destinés à entrer en contact avec une jante de montage, deux flancs prolongeant les bourrelets radialement vers l'extérieur et s'unissant dans un sommet comprenant une bande de roulement, au moins une armature de carcasse s'étendant depuis les bourrelets à travers les flancs jusqu'au sommet, ladite armature étant ancrée dans les deux bourrelets, une couche d'étanchéité s'étendant entre les deux bourrelets et située axialement à l'intérieur de l'armature de carcasse, chaque bourrelet comportant au moins :
- une structure annulaire de renforcement dite tringle ;
- une couche interne s'étendant radialement vers l'extérieur depuis ladite tringle et au contact de ladite armature de carcasse, dite bourrage tringle ;
- éventuellement une couche interne située axialement à l'extérieur de l'armature de carcasse et du bourrage tringle, dite bande latérale.

Par couche interne, on entend une couche qui n'est en contact ni avec l'air ambiant, ni avec le gaz de gonflage. De manière connue, il est possible de définir au sein du pneumatique trois types de zones :
- La zone radialement extérieure et en contact avec l'air ambiant, cette zone étant essentiellement constituée de la bande de roulement et du flanc externe du pneumatique.
- La zone radialement intérieure et en contact avec le gaz de gonflage, cette zone étant généralement constituée par la couche étanche aux gaz de gonflage, dite couche d'étanchéité et parfois appelée gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes de pneumatiques. Ce type de couche peut être par exemple une sous-couche de bande de roulement, une couche du sommet du pneumatique, une nappe carcasse, une couche du bourrelet, ou toute autre couche qui n'est pas en contact avec l'air ambiant ou le gaz de gonflage du pneumatique.

L'armature de carcasse comporte typiquement une pluralité d'éléments de renforcement de carcasse et est ancrée dans les deux bourrelets, par exemple par un retournement autour de la structure annulaire de renforcement, de manière à former dans chaque bourrelet un brin aller et un brin retour, chaque brin retour s'étendant radialement à l'extérieur jusqu'à une extrémité située à une distance radiale DRR du point radialement le plus à l'intérieur de la structure annulaire de renforcement du bourrelet, la distance radiale DRR étant de manière préférée supérieure ou égale à 15 % de la hauteur radiale H du pneumatique.

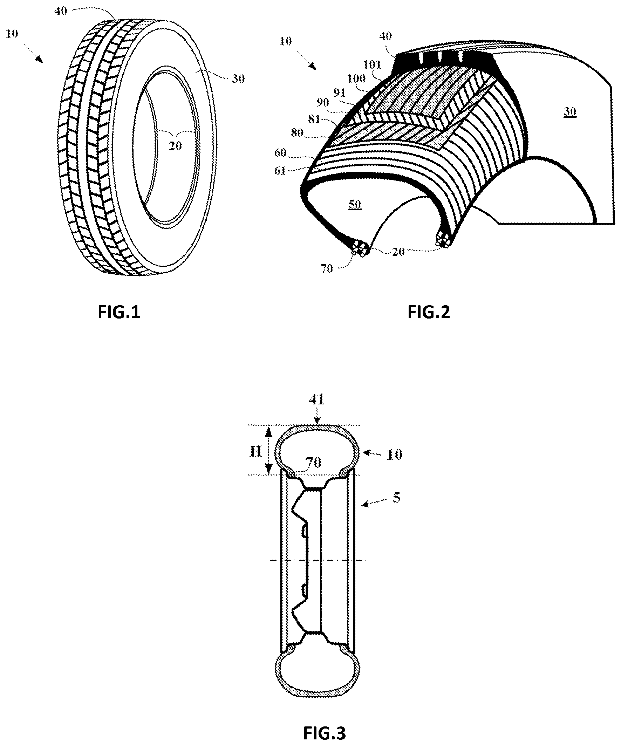

En référence à la figure 3, la « hauteur radiale » H d'un pneumatique est définie comme la distance radiale entre le point 71 radialement le plus à l'intérieur de la structure annulaire de renforcement 70 du bourrelet 20 et le point 41 radialement le plus à l'extérieur de la bande de roulement 40 lorsque le pneumatique 10 est monté sur une jante de montage 5 et gonflé à sa pression de service.

Par élément de renfort, ou élément de renforcement métallique ou textile, on entend un élément sous la forme d'un fil ou d'un câble, en tout ou partie métallique ou textile. En particulier, ledit élément de renfort peut être de nature textile, c'est-à-dire réalisé dans un matériau organique, notamment polymérique, ou inorganique, comme par exemple le verre, le quartz, le basalte ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

Ledit élément de renfort peut être de nature métallique, c'est-à-dire comprendre un métal choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton.

Chaque bourrelet comporte une couche interne dite bourrage tringle, ledit bourrage s'étendant radialement vers l'extérieur depuis ladite tringle et au contact de ladite armature de carcasse, avantageusement au moins situé partiellement entre le brin aller et le brin retour de l'armature de carcasse lorsque celle-ci est ancrée par un retournement autour de ladite tringle. Le bourrage tringle s'étend avantageusement radialement à l'extérieur du point radialement le plus à l'intérieur de la tringle du bourrelet jusqu'à une distance radiale DRB dudit point, la distance radiale DRB étant supérieure ou égale à 20 % de la hauteur radiale H du pneumatique.

Chaque bourrelet comporte éventuellement en outre une couche interne dite bande latérale, placée axialement à l'extérieur de l'armature de carcasse et du bourrage tringle, chaque bande latérale s'étendant avantageusement radialement à l'extérieur d'une extrémité radialement intérieure située à une distance DRI du point radialement le plus à l'intérieur de la tringle du bourrelet, DRI étant inférieure ou égale à 20 % de la hauteur radiale H du pneumatique, jusqu'à une extrémité radialement extérieure située radialement à l'extérieur du point radialement le plus à l'intérieur de la tringle du bourrelet, la distance radiale DRL entre l'extrémité radialement extérieure de la bande latérale et l'extrémité radialement intérieure de la bande latérale étant de manière préférée supérieure ou égale à 25 % de la hauteur radiale H du pneumatique.

De manière préférée, chaque bourrelet du pneumatique selon l'invention comprend une bande latérale constituée de ladite composition de caoutchouc C. De manière préférée, le bourrage tringle comprend ladite composition de caoutchouc C.

Dans un autre arrangement particulier, le pneumatique selon l'invention comprend deux inserts de flanc, situés axialement entre l'armature de carcasse et la couche d'étanchéité.

Ces inserts de flancs, connus de l'Homme du métier, permettent de renforcer les flancs et ainsi de supporter une charge lorsque la pression du pneumatique est réduite, voire nulle, autorisant ainsi le pneumatique à rouler sur une distance donnée à une vitesse donnée. Cette performance, dite performance « RME » (Roulage Mode Etendu), est requise par la législation ou par les constructeurs automobiles pour permettre au manufacturier de présenter le pneumatique comme adapté pour le roulage à plat. De tels pneumatiques sont connus, par exemple, des brevets US 4,779,658, US 5,769,980, US 6,022,434, US 7,093,633 ou FR 3 005 471.

Chaque insert de flanc présente une section radiale caractéristique en forme de croissant et est fabriqué à partir d'une composition de caoutchouc à base d'une composition de caoutchouc réticulable. Chaque insert doit présenter des propriétés à cuit, notamment une rigidité suffisante, pour supporter au moins partiellement la charge à pression réduite, voire sans pression.

Par définition dans le cadre de la présente, les inserts de flanc, situés axialement entre l'armature de carcasse et la couche d'étanchéité, ne font pas partie des bourrelets.

Le pneumatique selon l'invention est destiné à équiper des véhicules à moteur de type tourisme, SUV ("Sport Utility Vehicles"), ou deux roues (notamment motos), ou avions, ou encore des véhicules industriels choisis parmi camionnettes, « Poids-lourd », - c'est-à-dire métro, bus, engins de transport routier (camions, tracteurs, remorques), véhicules hors-la-route tels qu'engins agricoles ou de génie civil -, et autres. De manière préférée, le pneumatique selon l'invention est particulièrement adapté pour équiper les véhicules de type tourisme, camionnette et SUV.

### Premier élastomère

La composition de caoutchouc C comprise dans le pneumatique selon l'invention est à base d'un premier élastomère constitué de polybutdiène comprenant un groupe fonctionnel comprenant une fonction choisie dans le groupe constitué par les fonctions alcoxysilane, silanol, amine, acide carboxylique, polyéther et leur combinaison.

Le polybutadiene est un élastomère bien connu de l'Homme du métier obtenu par la polymérisation du 1,3-butadiène. Du fait de la présence de deux doubles liaisons, la polymérisation peut conduire à trois microstructures : *cis*-1,4, *trans*-1,4 et *vinyl*-1,2.

Avantageusement, le premier élastomère présente une plasticité Mooney allant de 40 à 70 unités Mooney, de préférence de 45 à 65 unités Mooney et de manière préférée de 45 à 55 unités Mooney. Ainsi, on améliore la processabilité de la composition de caoutchouc C en diminuant la plasticité Mooney du premier élastomère. On mesure la plasticité Mooney en utilisant un consistomètre selon la norme ASTM D-1646.

Dans arrangement non conforme à la présente invention, le premier élastomère est non fonctionnalisé et présente un fort taux de motifs cis-1,4. Ainsi, le polybutadiène présente un taux de motifs cis-1,4 d'au moins 80% et de préférence d'au moins 90% en poids du poids total du polybutadiène, plus particulièrement, dans un domaine de valeurs allant de 80% à 99%, de préférence de 90% à 99% et plus préférentiellement de 92% à 99% en poids du poids total du polybutadiène.

Dans un arrangement conforme à la présente invention, le premier élastomère comprend une fonction choisie dans le groupe constitué par les fonctions alcoxysilane, silanol, amine, acide carboxylique, polyéther et leur combinaison, de manière préférée ceux comprenant une fonction choisie dans le groupe constitué par les fonctions alcoxysilane, silanol, amine et leur combinaison, et de manière très préférée un groupe comprenant une fonction amine.

Dans un arrangement non conforme à la présente invention, le premier élastomère de la composition de caoutchouc C est un polybutadiène couplé et/ou étoilé, par exemple au moyen d'un atome silicium ou d'étain qui lie entre elles les chaînes élastomères. De manière préférée, dans cet arrangement particulier, le premier élastomère polybutadiène couplé et/ou étoilé présente un taux de motifs cis-1,4 d'au plus 50% et de préférence d'au plus 40% en poids du poids total du polybutadiène.

Ce type de polybutadiène est disponible commercialement. On peut citer par exemple le NIPOL BR 1250H^{™}, commercialisé par la société Zeon Corporation.

De préférence, la teneur en premier élastomère est comprise dans le domaine de valeurs allant de 30 à 70 pce, préférentiellement dans le domaine de valeurs allant de 40 à 65 pce.

### Deuxième élastomère

La composition de caoutchouc C comprise dans le pneumatique selon l'invention est également à base d'un deuxième élastomère. La composition de caoutchouc C comprend pour seuls élastomères lesdits premier et deuxième élastomères.

Dans un mode de réalisation, le deuxième élastomère est diénique.

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

On entend particulièrement par élastomère diénique susceptible d'être utilisé dans les compositions conformes à l'invention :
(a) tout homopolymère d'un monomère diène, conjugué ou non, ayant de 4 à 18 atomes de carbone ;
(b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

A titre de diènes conjugués conviennent les diènes conjugués ayant de 4 à 12 atomes de carbone, en particulier les 1,3-diènes, tels que notamment le 1,3-butadiène et l'isoprène.

A titre de diènes non conjugués conviennent les diènes non conjugués ayant de 6 à 12 atomes de carbone, tels que le 1,4-hexadiène, l'éthylidène norbornène, le dicyclopentadiène.

A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent par exemple le styrène, l'ortho-, méta-, para-méthylstyrène, le mélange commercial "vinyle-toluène", le para-tertiobutylstyrène.

A titre d'α-monooléfines aliphatiques conviennent notamment les α-monooléfines aliphatiques acycliques ayant de 3 à 18 atomes de carbone.

Plus particulièrement, l'élastomère diénique est :
(a') tout homopolymère d'un monomère diène conjugué, notamment tout homopolymère obtenu par polymérisation d'un monomère diène conjugué ayant de 4 à 12 atomes de carbone;
(b') tout copolymère obtenu par copolymérisation d'un ou plusieurs diènes conjugués entre eux ou avec un ou plusieurs composés vinylaromatiques ayant de 8 à 20 atomes de carbone;
(c') tout copolymère obtenu par copolymérisation d'un ou plusieurs diènes, conjugués ou non, avec l'éthylène, une α-monooléfine ou leur mélange comme par exemple les élastomères obtenus à partir d'éthylène, de propylène avec un monomère diène non conjugué du type précité,

De préférence, le deuxième élastomère est choisi dans le groupe constitué par les élastomères isopréniques.

Par "élastomère isoprénique", on entend un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène, en particulier les copolymères d'isoprènestyrène (SIR), d'isoprène-butadiène (BIR) ou d'isoprène-butadiène-styrène (SBIR), et les mélanges de ces élastomères.

De manière préférée, le deuxième élastomère est choisi dans le groupe constitué par le caoutchouc naturel, les polyisoprènes de synthèse et leurs mélanges, avantageusement dans le groupe constitué par le caoutchouc naturel, les polyisoprènes comprenant un taux massique de liaisons cis 1,4 d'au moins 90%, plus préférentiellement d'au moins 98% par rapport à la masse d'élastomère isoprénique et leurs mélanges.

Le deuxième élastomère, lorsqu'il est diénique et avantageusement isoprénique confère, entre autres, du collant à cru (« tack » en anglais) à la composition. Ainsi, on limite voire on supprime la nécessité d'utiliser une résine dite « tackifiante » dans la composition de caoutchouc C qui pourrait augmenter l'hystérèse de la composition et donc impacter négativement la résistance au roulement du pneumatique selon l'invention.

### Charge renforçante

La composition de caoutchouc C est également à base d'une charge renforçante comprenant majoritairement au moins un noir de carbone, dit « noir NC » dans le cadre de la présente invention, ledit noir NC présentant une surface spécifique BET au plus égale à 30 m²/g, et un indice d'absorption d'huile d'échantillons comprimés (COAN) au moins égal à 60 ml/100 g.

On caractérise les noirs de carbone par différentes propriétés, notamment par la surface spécifique, et par l'indice d'absorption d'huile d'échantillons comprimés (COAN pour « Compressed Oil Absorption Number » en anglais). Le COAN des noirs de carbone, est mesuré selon la norme ASTM D3493-16.

De préférence, ledit noir NC présente un indice d'absorption d'huile COAN au moins égal à 65 ml/100g, de manière préférée au moins égal à 70 ml/100g. Avantageusement, ledit noir NC présente un COAN au plus égal à 90 ml/100g, de manière préférée au plus égal à 85 ml/100 g et de préférence compris dans un domaine de valeur allant de 70 ml/100 g à 80 ml/100 g.

La surface spécifique BET des noirs de carbone est mesurée selon la norme D6556-10 (méthode multipoints (au minimum 5 points) - gaz : azote - domaine de pression relative P/P0 : 0.1 à 0.3).

De préférence, la surface spécifique BET dudit noir NC est comprise dans le domaine de valeur allant de 15 à 30 m²/g, de manière préférée allant de 15 à 25 m²/g, et de préférence allant de 17 à 25 m²/g.

Un exemple d'un noir de carbone NC utile aux besoins de l'invention est le « S204 » commercialisé par la société Orion Engineered Carbon. Ces noirs de carbone peuvent être utilisés à l'état isolé, tels que disponibles commercialement, ou sous tout autre forme, par exemple comme support de certains des additifs de caoutchouterie utilisés. Ces noirs de carbone pourraient être par exemple déjà incorporés à l'élastomère isoprénique sous la forme d'un masterbatch, réalisé par voie sèche ou liquide (voir par exemple les demandes WO 97/36724 ou WO 99/16600).

La charge renforçante peut également comprendre tout type de charge renforçante connue pour ses capacités à renforcer une composition de caoutchouc utilisable pour la fabrication de pneumatiques, par exemple une charge organique telle que du noir de carbone autre qu'un noir NC, une charge inorganique renforçante telle que de la silice, ou encore un coupage de ces deux types de charge. Comme noirs de carbone autres qu'un noir NC conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçant des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelle que soit sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17).

La surface spécifique CTAB de la silice est déterminée selon la norme française NF T 45-007 de novembre 1987 (méthode B).

La charge inorganique renforçante utilisée, en particulier s'il s'agit de silice, a de préférence une surface BET comprise entre 45 et 400 m²/g, plus préférentiellement comprise entre 60 et 300 m²/g.

Pour coupler la charge inorganique renforçante à l'élastomère, on peut de manière optionnelle utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes, ou des polyorganosiloxanes bifonctionnels.

On peut utiliser notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₃O)₃Si(CH₂)₃S₂]₂ ou le disulfure de bis-(triéthoxysilylpropyle), en abrégé TESPD, de formule [(C₂H₃O)₃Si(CH₂)₃S]₂. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bismonoéthoxydiméthylsilylpropyl tel que décrit dans la demande de brevet US 2004/132880.

A titre d'agent de couplage autre qu'alkoxysilane polysulfuré, on citera notamment des POS (polyorganosiloxanes) bifonctionnels ou encore des polysulfures d'hydroxysilane tels que décrits dans les demandes de brevet WO 02/30939 et WO 02/31041, ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, l'agent de couplage est présent à un taux correspondant à un domaine allant de 5 à 15% en masse par rapport à la masse de silice. De préférence, le taux d'agent de couplage est compris dans un domaine allant de 5 à 11% en masse par rapport à la masse de silice.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, permettant d'établir la liaison entre la charge et l'élastomère en présence ou non d'un agent de recouvrement ou de couplage.

Le taux de noir NC dans la composition de caoutchouc C est avantageusement compris dans un domaine de valeurs allant de 30 à 85 pce, de préférence de 45 à 80 pce, plus préférentiellement de 45 à 65 pce, ces domaines de valeurs permettant d'obtenir un pneumatique dont les propriétés d'endurance sont améliorées.

La charge renforçante comprend majoritairement, c'est-à-dire au moins 50% en masse, de noir NC. De manière préférée, la charge renforçante comporte 60%, 70%, 80%, 90% en masse de noir NC. De manière très préférée, la charge renforçante est constituée de noir NC.

La composition de caoutchouc C ne comprend avantageusement pas de noir de carbone dont la surface BET est inférieure à 15 m²/g ou en comprend moins de 10 pce, avantageusement moins de 5 pce, de manière préférée moins de 2 pce, préférentiellement moins de 1 pce.

La composition de caoutchouc C ne comprend avantageusement pas de noir de carbone dont la surface BET est supérieure à 30 m²/g ou en comprend moins de 10 pce, avantageusement moins de 5 pce, de manière préférée moins de 2 pce, préférentiellement moins de 1 pce.

La composition de caoutchouc C ne comprend avantageusement pas de silice ou en comprend moins de 10 pce, avantageusement moins de 5 pce, de manière préférée moins de 2 pce, préférentiellement moins de 1 pce.

### Système de réticulation

La composition de caoutchouc C comprend un système de réticulation qui peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 2,5 et 10 pce, en particulier entre 3 et 7 pce. L'accélérateur de vulcanisation est utilisé à un taux préférentiel compris dans un domaine allant de 0,4 à 4 pce, de préférence allant de 0,5 à 3,5 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### Additifs divers

La composition de caoutchouc C comprise dans le pneumatique selon l'invention peut également comprendre tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires antiozone, anti-ozonants chimiques, anti-oxydants, des agents anti-fatigue, des résines renforçantes telles que des bismaleimides, des accepteurs (par exemple résine phénolique novolaque) ou des donneurs de méthylène (par exemple HMT ou H3M).

De manière préférée, la composition de caoutchouc C ne comprend pas de résine renforçante ou en comprend moins de 10 pce, avantageusement moins de 5 pce, de manière préférée moins de 2 pce, préférentiellement moins de 1 pce et de manière très préférée moins de 0,2 pce.

Par résine renforçante, on entend une résine connue de l'homme du métier pour rigidifier des compositions de caoutchouc. Ainsi, une composition de caoutchouc dans laquelle une résine renforçante a été ajoutée présentera une rigidité, notamment un Module de Young (mesuré conformément à la norme ASTM 412-98a) ou un complexe de cisaillement dynamique G* (mesuré conformément à la norme ASTM D 5992-96), plus élevée que cette composition sans résine renforçante. De telles résines sont par exemple les résines phénoliques, les résines époxydes, les résines benzoxazines, les résines polyuréthanes, les résines aminoplastes, etc.

### Fabrication des compositions

La composition de caoutchouc C est fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges, les éventuels autres additifs divers, à l'exception du système de réticulation. L'incorporation de la charge à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation.

La phase non-productive est réalisée à haute température, jusqu'à une température maximale comprise entre 130°C et 170°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 110°C, par exemple entre 40°C et 100°C. On incorpore alors le système de réticulation, et le tout est alors mélangé pendant quelques minutes, par exemple entre 1 et 30 min.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme couche interne dans un pneumatique.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, de préférence sous pression, pendant un temps suffisant qui peut varier par exemple entre 5 et 90 min.

### Description des figures

La **figure 1** représente schématiquement un pneumatique 10 selon l'art antérieur. Le pneumatique 10 comporte un sommet comprenant une armature de sommet (invisible à la figure 1) surmontée d'une bande de roulement 40, deux flancs 30 prolongeant le sommet radialement vers l'intérieur, ainsi que deux bourrelets 20 radialement intérieurs aux flancs 30.
La **figure 2** représente schématiquement une vue en perspective partielle d'un autre pneumatique 10 selon l'art antérieur et illustre les différentes composantes du pneumatique. Le pneumatique 10 comprend une armature de carcasse 60 constituée de fils 61 enrobés de mélange caoutchouteux, et deux bourrelets 20 comportant chacun des structures annulaires de renforcement 70 qui maintiennent le pneumatique 10 sur la jante (non représentée). L'armature de carcasse 60 est ancrée dans chacun des bourrelets 20. Le pneumatique 10 comporte en outre une armature de sommet comprenant deux nappes 80 et 90. Chacune des nappes 80 et 90 est renforcée par des éléments de renforcement 81 et 91 filaires qui sont parallèles dans chaque couche et croisés d'une couche à l'autre, en faisant avec la direction circonférentielle des angles compris entre 10° et 70°. Le pneumatique comporte encore une armature de frettage 100, disposée radialement à l'extérieur de l'armature de sommet, cette armature de frettage étant formée d'éléments de renforcement 101 orientés circonférentiellement et enroulés en spirale. Une bande de roulement 40 est posée sur l'armature de frettage ; c'est cette bande de roulement 40 qui assure le contact du pneumatique 10 avec la route. Le pneumatique 10 représenté est un pneu « tubeless » : il comprend une couche d'étanchéité, dite « gomme intérieure » 50 (« inner liner » en anglais) en composition caoutchouteuse imperméable au gaz de gonflage, recouvrant la surface intérieure du pneumatique.
La **figure 3** représente un pneumatique 10 monté sur une jante de montage 5 et gonflé à sa pression de service, la « hauteur radiale » H du pneumatique correspondant à la distance radiale entre le point 71 radialement le plus à l'intérieur de la structure annulaire de renforcement 70 du bourrelet et le point 41 radialement le plus à l'extérieur de la bande de roulement 40.

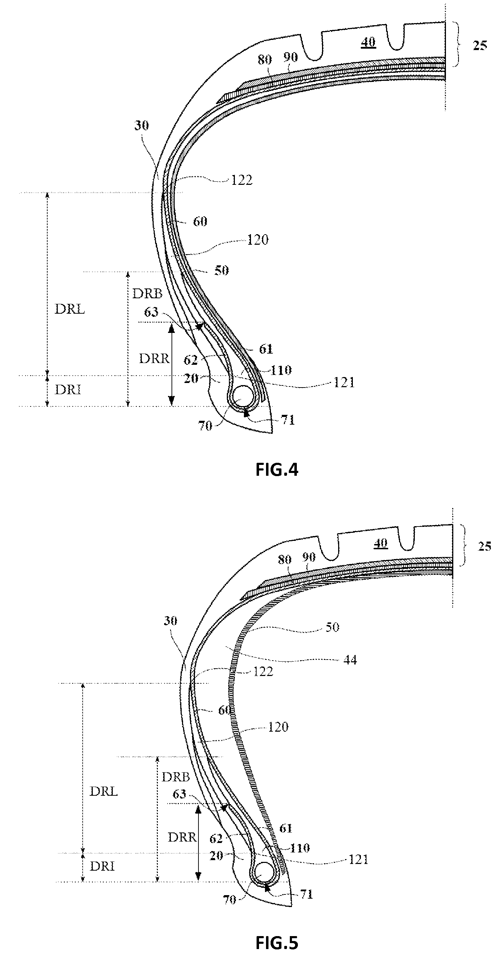

La **figure 4** représente schématiquement, en coupe radiale, la zone basse d'un pneumatique comprenant une bande latérale. Par zone basse, on entend la zone du pneumatique comprenant le bourrelet du pneumatique. Le pneumatique comporte deux bourrelets 20 destinés à entrer en contact avec une jante de montage (non représentée), chaque bourrelet 20 comportant au une structure annulaire de renforcement, en l'occurrence une tringle 70. Deux flancs 30 prolongent les bourrelets 20 radialement vers l'extérieur et s'unissent dans un sommet 25 comprenant une armature de sommet formée d'une première couche de renforts 80 et d'une deuxième couche de renforts 90, et surmontée radialement d'une bande de roulement 40. Chaque couche de renforts comprend des renforts filaires, enrobés dans une matrice formée de mélange caoutchouteux. Les renforts de chaque couche de renforts sont substantiellement parallèles entre eux ; les renforts des deux couches sont croisés d'une couche à l'autre selon un angle d'environ 20°, comme cela est bien connu de la personne du métier pour les pneumatiques dits radiaux.

Le pneumatique comporte encore une armature de carcasse 60 qui s'étend depuis les bourrelets 20 à travers les flancs 30 jusqu'au sommet 25. Cette armature de carcasse 60 comporte ici des renforts filaires orientés substantiellement radialement, c'est-à-dire faisant avec la direction circonférentielle un angle supérieur ou égal à 65° et inférieur ou égal à 90°.

L'armature de carcasse 60 comporte une pluralité d'éléments de renforcement de carcasse et est ancrée dans les deux bourrelets 20 par un retournement autour de la tringle 70, de manière à former dans chaque bourrelet un brin aller 61 et un brin retour 62. Le brin retour s'étend radialement à l'extérieur jusqu'à une extrémité 63 située à une distance radiale DRR du point 71 radialement le plus à l'intérieur de la structure annulaire de renforcement du bourrelet, la distance radiale DRR étant avantageusement supérieure ou égale à 15 % de la hauteur radiale H du pneumatique.

Chaque bourrelet comporte un bourrage tringle 110, le bourrage s'étendant radialement vers l'extérieur depuis la tringle 70 au contact de ladite armature de carcasse 60 et, pour une bonne partie, entre le brin aller 61 et le brin retour 62 de l'armature de carcasse 60.

Le bourrage tringle 110 s'étend radialement à l'extérieur du point 71 radialement le plus à l'intérieur de la structure annulaire de renforcement du bourrelet, jusqu'à une distance radiale DRB dudit point, la distance radiale DRB étant avantageusement supérieure ou égale à 20 % de la hauteur radiale H du pneumatique. De préférence, DRB est inférieur à H/2.

La surface intérieure du pneumatique est recouverte d'une gomme intérieure 50.

Une bande latérale 120 placée axialement à l'extérieur de l'armature de carcasse et du bourrage, s'étend radialement à l'extérieur d'une extrémité 121 radialement intérieure située à une distance radiale DRI du point 71 radialement le plus à l'intérieur de la structure annulaire de renforcement 70 du bourrelet, DRI étant avantageusement inférieure ou égale à 20 % de la hauteur radiale H du pneumatique, jusqu'à une extrémité 122 radialement extérieure, la distance radiale DRL entre l'extrémité 122 radialement extérieure de la bande latérale et l'extrémité 121 radialement intérieure de la bande latérale étant avantageusement supérieure ou égale à 25% de la hauteur radiale H du pneumatique.

La **figure 5** présente un pneumatique adapté pour le roulage à plat. La numération des éléments est identique à la figure 4. Le pneumatique de la figure 5 comprend un insert de flanc 44, axialement intérieurs à l'armature de carcasse 60. Ces inserts 44 avec leur section radiale caractéristique en forme de croissant sont destinés à renforcer le flanc. Chaque insert 44 est fabriqué à partir d'une composition de caoutchouc à base d'une composition de caoutchouc réticulable. Chaque insert de flanc 44 est susceptible de contribuer à supporter une charge correspondant à une partie du poids du véhicule lors d'une situation de roulage à plat. Les inserts de flanc 44 sont situés axialement extérieurs à la couche d'étanchéité 50. Ainsi, les inserts de flanc 44 sont disposés axialement entre l'armature de carcasse 32 et la couche d'étanchéité 50.

### Exemples

### - Méthodes de mesure

La mesure de plasticité Mooney se fait selon le principe suivant et conformément à la norme ASTM D-1646. La composition ou l'élastomère, généralement cru, est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

Les essais ont été effectués conformément à la norme française NF T 46-002 de septembre 1988. Toutes les mesures de traction ont été effectuées dans les conditions normales de température (23±2°C) et d'hygrométrie (50±5% d'humidité relative), selon la norme française NF T 40-101 (décembre 1979).

On a mesuré en seconde élongation (c'est-à-dire après accommodation) le module sécant nominal calculé en se ramenant à la section initiale de l'éprouvette (ou contrainte apparente, en MPa) à 10% d'allongement noté MA₁₀, sur des échantillons cuits 25 minutes à 150°C.

Ont également été mesurés les contraintes à la rupture (en MPa) et les allongements à la rupture (AR en %), à 23°C ± 2°C, selon la norme NF T 46-002, sur des échantillons cuits 25 minutes à 150°C. L'énergie rupture est égale au produit de l'allongement rupture par la contrainte rupture.

On estime la résistance au roulement par la mesure des pertes d'énergie par mesure, à une température de 60°C, de l'énergie restituée au sixième rebond d'un échantillon auquel on a imposé une énergie initiale, telle que décrite dans la norme DIN 53-512 d'avril 2000. Cette mesure est notée P60 et calculée comme suit : P60(%)=100x(E₀-E₁)/E₀, où E₀ représente l'énergie initiale et E₁ l'énergie restituée. Plus cette valeur est faible, plus la résistance au roulement est réduite et donc améliorée.

### Préparation des compositions

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique, la charge renforçante ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur (sulfénamide), sur un mélangeur (homo-finisseur) à 30 °C, en mélangeant le tout (phase productive) pendant un temps approprié (par exemple entre 5 et 12 min).

Les compositions ainsi obtenues sont ensuite calandrées sous la forme de plaques (épaisseur de 2 à 3 mm) ou de feuilles fines de caoutchouc puis sont soumises à une étape de cuisson à 150°C pendant 25 min avant la mesure de leurs propriétés physiques ou mécaniques.

### Exemple 1

Des essais ont été réalisés avec différentes compositions de caoutchouc présentées au tableau 1, à base de caoutchouc naturel ou d'un coupage de caoutchouc naturel et d'un élastomère constitué de polybutadiène non fonctionnel. La composition T1 correspond à une composition classique utilisée pour la constitution de bourrages tringle et/ou de bandes latérales. La composition T3 correspond à une composition utilisable pour la constitution de bourrages tringle et/ou de bandes latérales conforme à l'enseignement du document FR 2 940 189.

On mesure pour chaque composition à cru, c'est-à-dire avant vulcanisation, la valeur de plasticité Mooney exprimée en UM (unité Mooney). On mesure ensuite à cuit, donc après vulcanisation, l'allongement à rupture (AR), l'énergie de rupture, le module d'élasticité sous tension à 10% d'allongement (MA₁₀), et la perte P60 représentative de l'hystérèse du matériau.

Cette dernière valeur est exprimée en base 100, en prenant pour référence la composition T3. Une valeur plus faible que 100 indique une plus faible perte hystérétique, et donc une plus faible résistance au roulement.

Le couple allongement à rupture-énergie de rupture est un descripteur de l'endurance du matériau. Un ensemble de valeur plus élevé pour une composition donnée sera ainsi un indicateur d'une endurance améliorée pour un pneumatique incorporant un bourrage tringle et/ou une bande latérale comprenant cette composition.

**Tableau 1**

| | T1 | T2 | T3 | T4 | T5 | C1 | C2 | C3 | C4 |
|---|---|---|---|---|---|---|---|---|---|
| NR (1) | 100 | 100 | 100 | 50 | 50 | 50 | 50 | 65 | 35 |
| BR NF (2) | 0 | 0 | 0 | 50 | 50 | 50 | 50 | 35 | 65 |
| N326 | 50 | 0 | 0 | 0 | 0 | 0 | 0 | 0 | 0 |
| S204 (3) | 0 | 50 | 0 | 0 | 0 | 50 | 60 | 50 | 50 |
| N990 | 0 | 0 | 50 | 50 | 0 | 0 | 0 | 0 | 0 |
| N683 | 0 | 0 | 0 | 0 | 50 | 0 | 0 | 0 | 0 |
| Huile (4) | 2 | 2 | 2 | 2 | 2 | 2 | 2 | 2 | 2 |
| Additifs | 10 | 10 | 10 | 10 | 10 | 10 | 10 | 10 | 10 |
| Système de vulcanisation | 8,2 | 8,2 | 8,2 | 8,2 | 8,2 | 8,2 | 8,2 | 8,2 | 8,2 |
| *Dont soufre insoluble* | 7 | 7 | 7 | 7 | 7 | 7 | 7 | 7 | 7 |

| **Propriétés à cru** | | | | | | | | | |
|---|---|---|---|---|---|---|---|---|---|
| Plasticité Mooney (UM) | 60 | 74 | 54 | 67 | 105 | 87 | 102 | 79 | 95 |

| **Propriétés à cuit** | | | | | | | | | |
|---|---|---|---|---|---|---|---|---|---|
| AR (%) | 290 | 250 | 220 | 200 | 270 | 350 | 280 | 370 | 300 |
| Energie Rupture (MJ) | 24 | 32 | 29 | 25 | 35 | 46 | 42.3 | 48 | 41 |
| Rigidité MA₁₀ (MPa) | 6.3 | 5.9 | 5.5 | 5.6 | 5.6 | 5.6 | 6.4 | 5.5 | 5.7 |
| P60 (T3=Base 100) | 125.0 | 105. 0 | 100.0 | 157.5 | 128.8 | 81.3 | 95.0 | 81.3 | 80.0 |

| | | | | | | | | | |
|---|---|---|---|---|---|---|---|---|---|
| Compositions en pce (1) Caoutchouc naturel (2) Polybutadiène non fonctionnel « Buna C22 » commercialisé par la société Lanxess, plasticité Mooney de 63 UM (3) Noir de carbone « S204 » de la société Orion Engineered Carbon (4) Huile Paraffinique | | | | | | | | | |

Le système de vulcanisation comprend le soufre insoluble, l'accélérateur (N-ter-butyl-2-benzothiazyle sulfénamide « Santocure TBBS » de la société Flexsys) et le retardateur (N-cyclohexylthiophtalimide commercialisé sous dénomination « Vulkalent G » par la société Lanxess) de vulcanisation. Les additifs comprennent l'oxyde de zinc (grade industriel, société Umicore), l'acide stéarique (« Pristerene 4931 » de la société Uniqema) et l'antioxydant (N-1,3-diméthylbutyl-N-phénylparaphénylènediamine « Santoflex 6-PPD » de la société Flexsys).

On observe que les compositions de référence C1 à C4 présentent à cru une plasticité suffisante pour présenter une bonne processabilité. L'allongement à rupture et l'énergie de rupture sont améliorées sans que cela se fasse au détriment de la rigidité. Enfin, on remarque que les compositions de référence C1 à C4 présentent des pertes hystérétiques plus faibles que les compositions témoins.

### Exemple 2

Des essais ont été réalisés avec différentes compositions de caoutchouc présentées au tableau 2, à base de caoutchouc naturel ou d'un coupage de caoutchouc naturel et d'un élastomère constitué de polybutadiène fonctionnel. Les compositions T1 à T3 sont identiques à l'exemple 1.

La valeur de P60 est exprimée en base 100, en prenant pour référence la composition T3. Une valeur plus faible que 100 indique une plus faible perte hystérétique, et donc une plus faible résistance au roulement.

**Tableau 2**

| | | **T1** | **T2** | **T3** | **T6** | **T7** | **C5** | **C6** | **C7** | **C8** |
|---|---|---|---|---|---|---|---|---|---|---|
| NR (1) | | 100 | 100 | 100 | 50 | 50 | 50 | 50 | 65 | 35 |
| BR F (2) | | 0 | 0 | 0 | 50 | 50 | 50 | 50 | 35 | 65 |
| N550 | | 0 | 0 | 0 | 50 | 0 | 0 | 0 | 0 | 0 |
| N326 | | 50 | 0 | 0 | 0 | 0 | 0 | 0 | 0 | 0 |

| | | **T1** | **T2** | **T3** | **T6** | **T7** | **C5** | **C6** | **C7** | **C8** |
|---|---|---|---|---|---|---|---|---|---|---|
| S204 (3) | | 0 | 50 | 0 | 0 | 0 | 50 | 60 | 50 | 50 |
| N990 | | 0 | 0 | 50 | 0 | 0 | 0 | 0 | 0 | 0 |
| N683 | | 0 | 0 | 0 | 0 | 50 | 0 | 0 | 0 | 0 |
| Huile (4) | | 2 | 2 | 2 | 2 | 2 | 2 | 2 | 2 | 2 |
| Additifs | | 10 | 10 | 10 | 10 | 10 | 10 | 10 | 10 | 10 |
| Système de vulcanisation | | 8.2 | 8.2 | 8.2 | 8.2 | 8.2 | 8.2 | 8.2 | 8.2 | 8.2 |
| *Dont soufre insoluble* | | 7 | 7 | 7 | 7 | 7 | 7 | 7 | 7 | 7 |

| | **Propriétés à cru** | | | | | | | | | |
|---|---|---|---|---|---|---|---|---|---|---|
| Plasticité Moonev | | 60 | 74 | 54 | 105 | 108 | 88 | 96 | 80 | 98 |

| | **Propriétés à cuit** | | | | | | | | | |
|---|---|---|---|---|---|---|---|---|---|---|
| Déformation Rupture (%) | | 290 | 250 | 220 | 200 | 180 | 260 | 230.2 | 290 | 230 |
| Energie Rupture (MJ) | | 24 | 32 | 29 | 35 | 29 | 41 | 38.4 | 43 | 35 |
| Rigidité MA10 (MPa) | | 6.3 | 5.9 | 5.5 | 6.5 | 6.1 | 6.2 | 7.3 | 5.9 | 6.6 |
| P60 (T3=Base 100) | | 125.0 | 105.0 | 100.0 | 108.8 | 118.8 | 68.8 | 72.5 | 68.8 | 67.5 |

| | | | | | | | | | | |
|---|---|---|---|---|---|---|---|---|---|---|
| Compositions en pce (1) Caoutchouc naturel (2) Polybutadiène fonctionnel « Nipol BR 1250H » commercialisé par la société Zeon Corporation, plasticité Mooney de 50 UM (3) Noir de carbone « S204 » de la société Orion Engineered Carbon (4) Huile Paraffinique | | | | | | | | | | |

Le système de vulcanisation comprend le soufre insoluble, l'accélérateur (N-ter-butyl-2-benzothiazyle sulfénamide « Santocure TBBS » de la société Flexsys) et le retardateur (N-cyclohexylthiophtalimide commercialisé sous dénomination « Vulkalent G » par la société Lanxess) de vulcanisation. Les additifs comprennent l'oxyde de zinc (grade industriel, société Umicore), l'acide stéarique (« Pristerene 4931 » de la société Uniqema) et l'antioxydant (N-1,3-diméthylbutyl-N-phénylparaphénylènediamine « Santoflex 6-PPD » de la société Flexsys).

On observe que les compositions de référence C5 à C8 présentent à cru une plasticité suffisante pour présenter une bonne processabilité. Le couple allongement à rupture - énergie de rupture est amélioré sans que cela se fasse au détriment de la rigidité. Enfin, on remarque que les compositions de référence C5 à C8 présentent des pertes hystérétiques plus faibles que les compositions témoin.

## Revendications

1. Pneumatique comprenant deux bourrelets destinés à entrer en contact avec une jante de montage, deux flancs prolongeant les bourrelets radialement vers l'extérieur et s'unissant dans un sommet comprenant une bande de roulement, au moins une armature de carcasse s'étendant depuis les bourrelets à travers les flancs jusqu'au sommet, ladite armature étant ancrée dans les deux bourrelets, une couche d'étanchéité s'étendant entre les deux bourrelets et située axialement à l'intérieur de l'armature de carcasse, chaque bourrelet comportant au moins :
- une structure annulaire de renforcement dite tringle ;
- une couche interne s'étendant radialement vers l'extérieur depuis ladite tringle et au contact de ladite armature de carcasse, dite bourrage tringle ;
- éventuellement une couche interne située axialement à l'extérieur de l'armature de carcasse et du bourrage tringle, dite bande latérale ;
**caractérisé en ce que** les bourrelets comprennent une composition de caoutchouc C à base :
- d'un premier élastomère constitué de polybutadiène ;
- d'un deuxième élastomère ;
- d'une charge renforçante comprenant majoritairement un noir de carbone, dit noir NC, présentant une surface spécifique BET, mesurée selon la norme D6556-10 (méthode multipoints (au minimum 5 points) - gaz : azote - domaine de pression relative P/P0 : 0.1 à 0.3), au plus égale à 30 m²/g et un indice d'absorption d'huile d'échantillons comprimés (COAN, mesuré selon la norme ASTM D3493-16) au moins égal à 60 ml/100 g;
- d'un système de réticulation ;
dans lequel le premier élastomère de la composition de caoutchouc C est fonctionnalisé, le premier élastomère de la composition de caoutchouc C comprenant un groupe fonctionnel comprenant une fonction choisie dans le groupe constitué par les fonctions alcoxysilane, silanol, amine, acide carboxylique, polyéther et leur combinaison, ladite composition de caoutchouc C comprenant pour seuls élastomères lesdits premier et deuxième élastomères.

2. Pneumatique selon la revendication précédente dans lequel le deuxième élastomère de la composition de caoutchouc C est diénique.

3. Pneumatique selon l'une quelconque des revendications précédentes dans lequel la teneur en premier élastomère de la composition de caoutchouc C est comprise dans le domaine de valeurs allant de 30 à 70 pce, préférentiellement dans le domaine de valeurs allant de 40 à 65 pce.

4. Pneumatique selon l'une quelconque des revendications précédentes dans lequel le premier élastomère de la composition de caoutchouc C présente une plasticité Mooney allant de 40 à 70 unités Mooney, de préférence de 45 à 65 unités Mooney et de manière préférée de 45 à 55 unités Mooney, la plasticité Mooney étant mesurée en utilisant un consistomètre selon la norme ASTM D-1646.

5. Pneumatique selon l'une quelconque des revendications précédentes dans lequel ledit noir NC présente un indice COAN au plus égal à 90 ml/100 g.

6. Pneumatique selon l'une quelconque des revendications précédentes dans lequel le taux de noir NC de la composition de caoutchouc C est compris dans le domaine de valeurs allant de 30 à 85 pce, préférentiellement dans le domaine de valeurs allant de 45 à 80 pce, et de manière préférée de 45 à 65 pce.

7. Pneumatique selon l'une quelconque des revendications précédentes dans lequel la composition de caoutchouc C ne comprend pas de noir de carbone dont la surface BET est inférieure à 15 m²/g ou en comprend moins de 10 pce, avantageusement moins de 5 pce.

8. Pneumatique selon l'une quelconque des revendications précédentes dans lequel la composition de caoutchouc C ne comprend pas de silice ou en comprend moins de 10 pce, avantageusement moins de 5 pce.

9. Pneumatique selon l'une quelconque des revendications précédentes dans lequel le système de réticulation est un système de vulcanisation à base de soufre moléculaire et/ou d'un agent donneur de soufre.

10. Pneumatique selon l'une quelconque des revendications précédentes dans lequel chaque bourrelet comprend une bande latérale constituée de ladite composition de caoutchouc C.

11. Pneumatique selon l'une des revendications précédentes dans lequel le bourrage tringle comprend ladite composition de caoutchouc C.

12. Pneumatique selon l'une quelconque des revendications précédentes comprenant deux inserts de flanc, situés axialement entre l'armature de carcasse et la couche d'étanchéité.

## Patentansprüche

1. Reifen, umfassend zwei Wülste, die dazu bestimmt sind, mit einer Montagefelge in Kontakt zu gelangen, zwei Seitenwände, welche die Wülste radial nach außen verlängern und sich in einem Gürtel vereinen, der einen Laufstreifen umfasst, mindestens eine Karkassenverstärkung, die sich von den Wülsten aus über die Seitenwände bis zu dem Gürtel erstreckt, wobei die Verstärkung in den beiden Wülsten verankert ist, eine Dichtungslage, die sich zwischen den beiden Wülsten erstreckt und axial innerhalb der Karkassenverstärkung gelegen ist, wobei jede Wulst mindestens beinhaltet:
- eine ringförmige Verstärkungsstruktur, Wulstkern genannt;
- eine innere Lage, die sich von dem Wulstkern aus und in Kontakt mit der Karkassenverstärkung radial nach außen erstreckt, Wulstkernreiter genannt;
- gegebenenfalls eine innere Lage, die axial außerhalb der Karkassenverstärkung und des Wulstkernreiters gelegen ist, Seitenstreifen genannt;
**dadurch gekennzeichnet, dass** die Wülste eine Kautschukzusammensetzung C umfassen auf Basis:
- eines ersten Elastomers, das aus Polybutadien besteht;
- eines zweiten Elastomers;
- eines verstärkenden Füllstoffs, der mehrheitlich einen Ruß, NC-Ruß genannt, umfasst, der eine spezifische BET-Oberfläche, gemessen nach der Norm D6556-10 (Mehrpunkt-Methode (mindestens 5 Punkte) - Gas: Stickstoff - Relativdruckbereich P/P0: 0,1 bis 0,3), von höchstens 30 m²/g und eine Ölabsorptionszahl komprimierter Proben (COAN, gemessen nach der Norm ASTM D3493-16) von mindestens 60 ml/100 g aufweist;
- eines Vernetzungssystems;
wobei das erste Elastomer der Kautschukzusammensetzung C funktionalisiert ist, wobei das erste Elastomer der Kautschukzusammensetzung C eine funktionelle Gruppe umfasst, die eine Funktion umfasst, die aus der aus den Alkoxysilan-, Silanol-, Amin-, Carbonsäure-, Polyetherfunktionen und ihrer Kombination bestehenden Gruppe gewählt ist, wobei die Kautschukzusammensetzung C als einzige Elastomere die ersten und zweiten Elastomere umfasst.

2. Reifen nach dem vorhergehenden Anspruch, wobei das zweite Elastomer der Kautschukzusammensetzung C ein Dien ist.

3. Reifen nach einem der vorhergehenden Ansprüche, wobei der Gehalt der Kautschukzusammensetzung C an dem ersten Elastomer in dem Wertebereich von 30 bis 70 phr, bevorzugt in dem Wertebereich von 40 bis 65 phr liegt.

4. Reifen nach einem der vorhergehenden Ansprüche, wobei das erste Elastomer der Kautschukzusammensetzung C eine Mooney-Plastizität von 40 bis 70 Mooney-Einheiten, bevorzugt von 45 bis 65 Mooney-Einheiten und besonders bevorzugt von 45 bis 55 Mooney-Einheiten aufweist, wobei die Mooney-Plastizität unter Verwendung eines Konsistometers nach der Norm ASTM D-1646 gemessen wird.

5. Reifen nach einem der vorhergehenden Ansprüche, wobei der NC-Ruß eine COAN von höchstens 90 ml/100 g aufweist.

6. Reifen nach einem der vorhergehenden Ansprüche, wobei der NC-Ruß-Anteil der Kautschukzusammensetzung C in dem Wertebereich von 30 bis 85 phr, bevorzugt in dem Wertebereich von 45 bis 80 phr und besonders bevorzugt von 45 bis 65 phr liegt.

7. Reifen nach einem der vorhergehenden Ansprüche, wobei die Kautschukzusammensetzung C keinen Ruß umfasst, dessen BET-Oberfläche kleiner als 15 m²/g ist, oder weniger als 10 phr, vorteilhafterweise weniger als 5 phr davon umfasst.

8. Reifen nach einem der vorhergehenden Ansprüche, wobei die Kautschukzusammensetzung keine Kieselsäure umfasst oder weniger als 10 phr, vorteilhafterweise weniger als 5 phr davon umfasst.

9. Reifen nach einem der vorhergehenden Ansprüche, wobei das Vernetzungssystem ein Vulkanisationssystem auf Basis von molekularem Schwefel und/oder eines Schwefeldonors ist.

10. Reifen nach einem der vorhergehenden Ansprüche, wobei jede Wulst einen Seitenstreifen umfasst, der aus der Kautschukzusammensetzung C besteht.

11. Reifen nach einem der vorhergehenden Ansprüche, wobei der Wulstkernreiter die Kautschukzusammensetzung C umfasst.

12. Reifen nach einem der vorhergehenden Ansprüche, umfassend zwei Seitenwandeinsätze, die axial zwischen der Karkassenverstärkung und der Dichtungslage gelegen sind.

## Claims

1. Tyre comprising two beads intended to come into contact with a mounting rim, two sidewalls extending the beads radially outwards and coming together in a crown comprising a tread, at least one carcass reinforcement extending from the beads through the sidewalls as far as the crown, said reinforcement being anchored in the two beads, an airtight layer extending between the two beads and located axially inside the carcass reinforcement, each bead comprising at least:
- an annular reinforcing structure known as a bead wire;
- an internal layer extending radially outwards from the said bead wire and in contact with the said carcass reinforcement, known as bead-wire filling;
- optionally an internal layer located axially outside the carcass reinforcement and the bead-wire filling, known as side strip;
**characterized in that** the beads comprise a rubber composition C based:
- on a first elastomer formed of polybutadiene;
- on a second elastomer;
- on a reinforcing filler predominantly comprising a carbon black, known as CB black, exhibiting a BET specific surface at most equal to 30 m²/g and an oil absorption number of compressed sample (COAN) at least equal to 60 ml/100 g;
- on a crosslinking system;
in which the first elastomer of the rubber composition C is functionalized, the first elastomer of the rubber composition C comprising a functional group comprising a function selected from the group consisting of the alkoxysilane, silanol, amine, carboxylic acid and polyether functions and their combination, the said rubber composition C comprising, for sole elastomers, the said first and second elastomers.

2. Tyre according to the preceding claim, in which the second elastomer of the rubber composition C is a diene elastomer.

3. Tyre according to any one of the preceding claims, in which the content of first elastomer of the rubber composition C is within the range of values extending from 30 to 70 phr, preferentially within the range of values extending from 40 to 65 phr.

4. Tyre according to any one of the preceding claims, in which the first elastomer of the rubber composition C exhibits a Mooney plasticity ranging from 40 to 70 Mooney units, preferably from 45 to 65 Mooney units and in a preferred way from 45 to 55 Mooney units, the Mooney plasticity being measured using a consistometer according to Standard ASTM D-1646.

5. Tyre according to any one of the preceding claims, in which the said CB black exhibits a COAN number at most equal to 90 ml/100 g.

6. Tyre according to any one of the preceding claims, in which the content of CB black of the rubber composition C is within the range of values extending from 30 to 85 phr, preferentially within the range of values extending from 45 to 80 phr, and preferably from 45 to 65 phr.

7. Tyre according to any one of the preceding claims, in which the rubber composition C does not comprise carbon black, the BET specific surface of which is less than 15 m²/g, or comprises less than 10 phr, advantageously less than 5 phr, thereof.

8. Tyre according to any one of the preceding claims, in which the rubber composition C does not comprise silica or comprises less than 10 phr, advantageously less than 5 phr, thereof.

9. Tyre according to any one of the preceding claims, in which the crosslinking system is a vulcanization system based on molecular sulfur and/or on a sulfur-donating agent.

10. Tyre according to any one of the preceding claims, in which each bead comprises a side strip formed of the said rubber composition C.

11. Tyre according to one of Claims 1 to 19, in which the bead-wire filling comprises the said rubber composition C.

12. Tyre according to any one of the preceding claims, comprising two sidewall inserts, located axially between the carcass reinforcement and the airtight layer.
